# EUROPÄISCHE PATENTSCHRIFT

(11) **EP 3 867 717 B1**
(45) Veröffentlichungstag und Bekanntmachung des Hinweises auf die Patenterteilung: **12.07.2023**
(21) Anmeldenummer: 19794441.6
(22) Anmeldetag: 16.10.2019
(51) Int. Cl.: G05B 19/418, B23K 37/02, B26D 5/00, B26F 1/38

(54) **VERFAHREN ZUM ABSORTIERVORGANG UNTERSTÜTZENDEN ANZEIGEN VON WERKSTÜCK-DARSTELLUNGEN**
METHOD FOR DISPLAYING WORKPIECE REPRESENTATIONS TO SUPPORT A SORTING PROCESS
PROCÉDÉ D'AFFICHAGE DE REPRÉSENTATIONS DE PIÈCES À USINER POUR FACILITER UNE OPÉRATION DE TRI

(30) Priorität: 19.10.2018 DE 102018126050
(43) Veröffentlichungstag der Anmeldung: 25.08.2021
(73) Patentinhaber: TRUMPF Werkzeugmaschinen SE + Co. KG, 71254 Ditzingen (DE); Fraunhofer-Gesellschaft zur Förderung der angewandten Forschung e.V., 80686 München (DE)
(72) Erfinder: KIEFER, Manuel, 74889 Sinsheim (DE); PÖNITZ, Willi, 71229 Leonberg (DE); BITTO, Dominik, 70825 Münchingen (DE); TESCHNER, Marc, 70176 Stuttgart (DE)
(74) Vertreter: Trumpf Patentabteilung
(86) Internationale Anmeldenummer: PCT/EP2019/078024
(87) Internationale Veröffentlichungsnummer: WO 2020/079036

(56) Entgegenhaltungen:
- DE-A1-102016 120 132
- DE-A1-102017 107 357

## Beschreibung

Die vorliegende Erfindung betrifft ein Verfahren zum Anzeigen einer Abfolge von Werkstück-Darstellungen und/oder Auftragsinformation bei der Fertigung von Werkstücken, insbesondere zum Unterstützen eines Absortiervorgangs von mit einer Flachbettwerkzeugmaschine hergestellten Werkstücken. Ferner betrifft die Erfindung ein Fertigungssystem zur Fertigung von Werkstücken, insbesondere von Blechbauteilen.

Beispielhaft für die metallverarbeitende Industrie werden in der industriellen Metall- und/oder Blechverarbeitung oft viele Teile unterschiedlicher Größe und Stückzahl gemeinsam erzeugt und verschiedenen Verarbeitungsschritten je nach Auftrag zugeführt. So werden beispielsweise Werkstücke mit einer Werkzeugmaschine gemäß einem Schneidplan in verschiedenen Formen und Stückzahlen aus einem beispielsweise in einer Tafelform vorliegenden Flachmaterial getrennt. Beispielsweise werden die Werkstücke aus dem Flachmaterial mit einem Laser ausgeschnitten. Derartige Werkzeugmaschinen geben die bearbeiteten Werkstücke, z. B. das Laserschnittgut, unter Beibehaltung der Tafelform nebeneinander liegend beispielsweise auf einer Palette oder einem Förderband aus. Von dort werden sie absortiert und den nachfolgenden Verarbeitungsschritten zugeführt.

EP 1 524 063 A1 offenbart ein Verfahren zur Markierung von Werkstücken, bei dem eine Platte geschnitten oder gestanzt wird. Zu Erleichterung des Absortierens der Werkstücke projiziert ein Projektor unterschiedliche optische Markierungen auf die geschnittenen bzw. gestanzten Werkstücke.

DE 10 2017 107357 A1 offenbart ein Verfahren zur Unterstützung eines Bedieners bei einem Absortiervorgang von Werkstücken, die auf einem Sortiertisch angeordneten sind und mit einer Flachbettwerkzeugmaschine, insbesondere einer Laserschneid- oder Stanz-Flachbettwerkzeugmaschine, gemäß einem Bearbeitungsplan erzeugt wurden. Ein Ortungssystem zur Bestimmung einer Position einer Hand eines Bedieners im Raum liefert Information über ein Werkstück, das der Position einer Hand des Bedieners zugeordnet ist. Die Information wird dem Bediener angezeigt.

DE 10 2016 120132 A1 offenbart eine Werkstücksammelstelleneinheit für eine Werkzeugmaschine. Diese weist einen Ablegebereich für Werkstücke, die im Rahmen eines Bearbeitungsplans von der Werkzeugmaschine erzeugt wurden, eine Anzeigeeinheit, die dazu ausgebildet ist, Werkstückinformation über die auf dem Ablegebereich abgelegten weiterzuverarbeitende Werkstücke für einen Bediener anzuzeigen, und eine Signalvorrichtung auf.

Einem Aspekt dieser Offenbarung liegt die Aufgabe zugrunde, einem Maschinenbediener die Bedienung beim Absortieren und Zuordnen der Werkstücke weiter zu vereinfachen sowie ergonomischer zu gestalten und eine zielgerichtetere und schnellere Zuordnung der Werkstücke zu ermöglichen.

Zumindest eine dieser Aufgaben wird gelöst durch ein Verfahren zum einen Absortiervorgang unterstützenden Anzeigen einer Abfolge von Werkstück-Darstellungen und/oder Auftragsinformation bei der Fertigung von Werkstücken mit einem Fertigungssystem nach Anspruch 1 und durch ein Fertigungssystem zur Fertigung von Werkstücken nach Anspruch 10. Weiterbildungen sind in den Unteransprüchen angegeben.

Ein Aspekt der hierin offenbarten Konzepte betrifft ein Verfahren zum einen Absortiervorgang unterstützenden Anzeigen einer Abfolge von Werkstück-Darstellungen und/oder (bzw. und optional) Auftragsinformation bei der Fertigung von Werkstücken, insbesondere von Blechbauteilen, mit einem Fertigungssystem. Dabei weist das Fertigungssystem eine Werkzeugmaschinensteuerung auf, in der einem jeden der Werkstücke zugeordnete Werkstück-Bilddaten und/oder Auftragsdaten als Teil eines maschinenlesbaren Bearbeitungsplans abgelegt sind, wobei für jedes Werkstück die Werkstück-Bilddaten eine auf Geometriedaten der zu fertigenden Werkstücke basierende Darstellung und die Auftragsdaten Kenndaten eines zum Werkstück gehörenden Fertigungsauftrags umfassen. Das Fertigungssystem weist ferner auf eine Flachbettwerkzeugmaschine, mit der die Werkstücke aus einem plattenförmigen Ausgangsmaterials gemäß dem maschinenlesbaren Bearbeitungsplan gefertigt werden können, und eine Fördereinrichtung, mit der die Werkstücke als Schnittgut zum Absortieren der Werkstücke zu einer Absortierstelle transportiert werden können. Dabei ist das Schnittgut plattenförmig angeordnet, wenn es von der Fördereinrichtung befördert wird. Das Fertigungssystem weist ferner eine Anzeigeeinheit mit einem Prozessor zum Empfangen von auf einem Monitor der Anzeigeeinheit auszugebenden Daten auf, wobei der Monitor im Bereich der Fördereinrichtung, insbesondere nahe der Absortierstelle, angeordnet ist. Das Verfahren umfasst die folgenden Schritte:
Transportieren von gefertigten Werkstücken mit der Fördereinrichtung gemäß einer vom Bearbeitungsplan vorgegebenen Reihenfolge und Anordnung zur Absortierstelle,
Empfangen von von der Werkzeugmaschinensteuerung bereitgestellten Werkstück-Bilddaten und/oder Auftragsdaten für die Werkstücke, die zur Absortierstelle transportiert werden, im Prozessor der Anzeigeeinheit und
Anzeigen der Werkstück-Bilddaten und/oder der Auftragsdaten auf dem Monitor der Anzeigeeinheit in einer Abfolge und optional der Anordnung derart, dass die Abfolge und optional die Anordnung der Werkstück-Bilddaten und/oder der Auftragsdaten der Reihenfolge und optional der Anordnung der von der Fördereinrichtung zur Absortierstelle transportierten Werkstücke entspricht.

In einem weiteren Aspekt weist ein Fertigungssystem zur Fertigung von Werkstücken, insbesondere von Blechbauteilen, eine Werkzeugmaschinensteuerung auf, in der jedem der zu fertigenden Werkstücke zugeordnete Werkstück-Bilddaten und/oder (bzw. und optional) Auftragsdaten als Teil eines maschinenlesbaren Bearbeitungsplans abgelegt sind, wobei für jedes Werkstück die Werkstück-Bilddaten eine auf Planungsdaten der Werkstücke basierende Werkstück-Darstellung und die Auftragsdaten Kenndaten eines zum Werkstück gehörenden Fertigungsauftrags umfassen. Das Fertigungssystem weist ferner auf eine Flachbettwerkzeugmaschine, mit der die Werkstücke aus einem plattenförmigen Ausgangsmaterials gemäß dem maschinenlesbaren Bearbeitungsplan gefertigt werden, eine Fördereinrichtung, mit der die Werkstücke als Schnittgut zum Absortieren der Werkstücke zu einer Absortierstelle transportiert werden, wobei das Schnittgut plattenförmig angeordnet von der Fördereinrichtung befördert wird, und eine Anzeigeeinheit mit einem Prozessor zum Empfangen von auf einem Monitor der Anzeigeeinheit auszugebenden Daten. Dabei ist der Monitor von der Absortierstelle aus sichtbar angeordnet und der Prozessor zum Empfangen von von der Werkzeugmaschinensteuerung bereitgestellten Werkstück-Bilddaten und/oder Auftragsdaten für die Werkstücke, die zur Absortierstelle transportiert werden, ausgebildet. Die Werkzeugmaschinensteuerung ist dazu ausgebildet, dass der Monitor derart gemäß dem zuvor beschriebenen Verfahren ansteuerbar ist, dass die Werkstück-Bilddaten und/oder die Auftragsdaten auf dem Monitor in einer Abfolge und Anordnung derart angezeigt werden, dass die Abfolge und optional die Anordnung der Werkstück-Bilddaten und/oder Auftragsdaten der Reihenfolge und optional der Anordnung der von der Fördereinrichtung zur Absortierstelle transportierten Werkstücke entspricht.

In einigen Ausführungsformen ist der Monitor im Bereich der Fördereinrichtung, insbesondere oberhalb eines Förderbands, und/oder im Bereich der Absortierstelle angeordnet. Beispielsweise kann der Monitor sich über nahezu die gesamte Breite des Förderbands erstrecken oder ein oder mehrere kleine Bildschirme unterhalb eines Umkehrpunkts des Fertigungsbands im Bereich der Absortierstelle umfassen. Als alternativer oder zusätzlicher Monitor kann eine Virtual-reality-Brille oder ein Head-up-Display-Anzeigensystem eingesetzt werden.

Hierin sind Werkstück-Darstellungen Darstellungen, die auf Werkstück-Bilddaten basieren und insbesondere auf Geometriedaten der zu fertigenden Werkstücke zurückgehen; sei es in Form einer 2D- oder 3D- Darstellung eines Datensatzes eines Werkstücks, einer schematischen Zeichnung oder einer Aufnahme. In einigen Weiterbildungen des Verfahrens können Werkstück-Bilddaten auf dem Monitor als ein Monitorbild angezeigt werden, das vollständige oder nur teilweise Werkstück-Darstellungen nur von denjenigen Werkstücken umfasst (oder hervorhebt), die in einem von einem Werker absortierbaren Bereich, beispielsweise in einem Querstreifen des Förderbandes im Bereich einer Förderbandumkehr, liegen. Zum Beispiel können die Werkstücke, die zum Absortieren an der Absortierstelle positioniert sind, unter Einbezug eines im Bearbeitungsplan abgelegten Schneidplans, der die Anordnung von gefertigten Werkstücken im plattenförmigen Ausgangsmaterial bestimmt, insbesondere unter Einbezug von relativen Lagen der Werkstücke innerhalb der Anordnung von gefertigten Werkstücken bestimmt werden.

Erfindungsgemäß wird die angezeigte Anordnung von gefertigten Werkstücken unter Einbezug eines Vorschubwertes des Förderbands der Fördereinrichtung bestimmt.

Die Werkstück-Bilddaten können mit einer Ausrichtung und/oder an einer Position entlang einer Querrichtung eines Förderbands der Fördereinrichtung als Werkstück-Darstellungen angezeigt werden, wobei die Ausrichtung und/oder Position einer der Werkstück-Darstellungen unter Einbezug des Bearbeitungsplans und/oder unter Einbezug eines von der Fördervorrichtung bereitgestellten Transportwegs für die Absortierstelle bestimmt werden.

In einem weiteren Schritt kann, wenn die Fördervorrichtung dazu aktiviert wird, eine neue Vorschubposition eines Förderbands der Fördereinrichtung einzunehmen, sodass weitere Werkstücke an die Absortierstelle transportiert werden, eine Verbuchung derjenigen Werkstücke als vom Förderband absortiert automatisiert vorgenommen werden, die bei der zuvor eingenommenen Vorschubposition an die Absortierstelle transportiert worden waren. Die Aktivierung der Fördereinrichtung zur Einnahme der neuen Vorschubposition kann automatisch, insbesondere durch ein beispielsweise verzögertes Freigeben einer Lichtschranke am Ende des Förderbands, ausgelöst werden. Alternativ kann sie manuell von einem Werker vorgenommen werden.

In weiteren Schritten kann vorgenommen werden ein Verifizieren von automatisierten Verbuchungen von entnommenen Teilen in der Werkzeugmaschinensteuerung mittels Bilderfassung der entnommenen Teile und/oder eines Restgitters oder Restgitterabschnitts oder ein benutzergesteuertes Verifizieren von automatisierten Verbuchungen von entnommenen Teilen in der Werkzeugmaschinensteuerung. Insbesondere kann so erkannt werden, dass alle Werkstücke im Bereich der Absortierstelle absortiert wurden, und ein Ansteuern der Fördereinrichtung, um weitere Werkstücke zur Absortierstelle zu transportieren, kann ausgelöst werden.

In weiteren Schritten können gemäß dem Bearbeitungsplan Gruppen von abzusortierenden Werkstücken erzeugt werden, denen jeweils ein Restgitterabschnitt zugeordnet ist, in dem die abzusortierenden Werkstücke einer Gruppe angeordnet sind. Aufeinanderfolgende Restgitterabschnitte können jeweils mit einem, insbesondere von der Schneideinheit vorgenommenen, Untergliederungsschnitt voneinander getrennt werden. Entsprechend können die Werkstücke einer Gruppe mit einer einheitlichen Vorschubposition eines Förderbands der Fördereinrichtung an die Absortierstelle transportiert werden, im Prozessor können Werkstück-Bilddaten und/oder Auftragsdaten für die Werkstücke der Gruppe, die zuletzt zur Absortierstelle transportiert wurde, empfangen und verarbeitet werden, und die Werkstück-Bilddaten und/oder Auftragsdaten der Werkstücke der Gruppe, die zuletzt zur Absortierstelle transportiert wurde, können auf dem Monitor angezeigt werden. Dabei kann der Restgitterabschnitt einer Gruppe eine Vorderkante aufweisen, die die Vorschubposition eines Förderbands der Fördereinrichtung für die Positionierung der Gruppe an der Absortierstelle definiert. Entsprechend kann das Förderband der Fördereinrichtung solange bewegt werden, bis beispielsweise mit einem Sensor wie einer Lichtschranke erkannt wird, dass die Vorderkante einer Gruppe eine vorbestimmte Förderposition eingenommen hat.

Die hierein beschriebenen Konzepte betreffen allgemein Verfahren, die das Absortieren von Werkstücken und deren Zusortieren zu auftragsspezifischen Ablageorten und/oder nachfolgenden Bearbeitungsschritten schnell und effizient machen. Insbesondere ermöglicht das Verfahren eine zeitgerechte Absortierung mit einer hohen Geschwindigkeit und Effizienz, die insbesondere dem Maschinentempo bei der Erzeugung der Werkstücke gerecht werden kann, weil das erfindungsgemäß gestaltete Darstellen der Informationen auf die physischen Gegebenheiten der menschlichen Wahrnehmung und Aufnahme von Informationen Rücksicht nimmt. Das Verfahren ist dabei insbesondere darauf gerichtet, die Wahrnehmung der gezeigten Informationen durch den Bediener in bestimmter Weise zu verbessern oder zweckmäßig zu gestalten. Dies kann ein effizientes Absortieren bei einer entsprechend hohen Maschinengeschwindigkeit bei der Fertigung überhaupt erst ermöglichen.

Die hierein beschriebenen Konzepte weisen beispielsweise die Vorteile auf, dass eine fehleranfällige Bildverarbeitung vermieden werden kann und eine Teileverschiebung oder Verdeckung auf die Unterstützung des Werkers keinen Einfluss hat. Das Verfahren lässt sich robuster in verschiedensten Produktionsumgebung implementieren und wird von den Lichtverhältnissen und der Verschmutzungssituation nicht beeinflusst. Ferner erlaubt es eine ergonomischere Arbeitsweise des Werkers, der mit Blick auf die zur Absortierung anstehenden Werkstücke schnell und einfach eine günstige Vorgehensweise für das Absortieren der einzelnen Werkstücke entwerfen kann.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine Darstellung einer beispielhaften Entnahmestation einer Flachbettwerkzeugmaschine zur Verdeutlichung eines Absortiervorgangs,
- Fig. 2: eine Skizze zur Verdeutlichung der Darstellung von Werkstück-Bilddaten und Auftragsdaten auf einem Monitor zur Unterstützung des Absortiervorgangs,
- Fig. 3: ein Flussdiagramm eines beispielhaften Verfahrens zum einen Absortiervorgang unterstützenden Anzeigen einer Abfolge von Werkstück-Bildern und/oder Auftragsdaten bei der Fertigung von Werkstücken und
- Figuren 4A bis 4C: beispielhafte Darstellungen von aufeinander folgenden Monitorbildern während eines Absortiervorgangs.

Hierin beschriebene Aspekte basieren zum Teil auf der Erkenntnis, dass ein Absortiervorgang von Blechteilen mit der Darstellung von werkstückspezifischer Information (wie Folgearbeitsplatz, Auftragsdaten, ...) effizienter gestaltet werden kann, indem die zeitaufwändige und fehleranfällige Einblicknahme in Begleitpapiere der zugrundeliegenden Aufträge vermieden wird.

Die Erfinder haben dabei berücksichtigt, dass bei der Zuführung von Werkstücken auf einem Förderband die Reichweite und die Zugriffsmöglichkeiten eines Werkers auf abzusortierende Werkstücke die absortierbare Auswahl der Werkstücke bei stillstehendem Förderband beschränken, wie sie dem Werker an einem zum Absortieren eingerichteten Arbeitsplatz (Absortierstelle) vorliegt. Entsprechend wird vorgeschlagen, nur zu diesen wenigen Werkstücken auf einem Anzeigegerät in der Nähe die momentan notwendigen Informationen einzublenden. Mit anderen Worten wird auch die Informationsanzeige auf diese wenigen Werkstücke mit Ortsbezug zur Reichweite beschränkt. Die Ermittlung der Werkstücke, die in Reichweite des Werkers an der Absortierstelle vorliegen, wird dabei anhand von Tafeldaten und unter Verwendung von Information über den Vorschub des Förderbands vorgenommen. In einer Teilautomatisierung kann zusätzlich eine Verbuchung von absortierten Werkstücke ebenfalls anhand des Bandvorschubes oder durch Integration anderer Technologie wie z. B. Handtracking vorgeschlagen oder vorgenommen werden.

Im Unterschied zur in der eingangs genannten EP 1 524 063 A1 offenbarten Projektion von Information auf die Werkstücke sind die hierin genannten Verfahren unabhängig von Größe oder Materialbeschaffenheit der Werkstücke, die einer Projektion entgegenstehen könnten.

So erkannten die Erfinder, dass ergänzend zur Ausgabe von Werkstücken, die mit einer 2D-Laserschneidmaschine erzeugt werden, Informations- und Eingabegeräte vorgesehen und entsprechend zur Bildausgabe genutzt werden können. Zur Fertigung wird z. B. aus einer Blechtafel eine große Anzahl von unterschiedlich geformten und unterschiedlichen Aufträgen zugeordneten Werkstücken mit einer 2D-Laserschneidmaschine geschnitten. Das Schnittgut wird z. B. mit einem Umlagerungssystem auf ein Förderband umgelagert und einem an der Absortierstelle wartenden Werker zum Absortieren zugeführt. Das Förderband fährt die geschnittenen Tafeln dem Werker auf einer ergonomischen Arbeitshöhe entgegen und stoppt, sobald die vordere Kante der Tafel das Förderbandende (den Rücklaufbereich des umlaufenden Förderbands) erreicht hat.

Anhand der bekannten Werkstücke innerhalb der Tafeln werden nun die Geometrien der vordersten Teile, die dem Werker zugänglich sind, und zum Absortieren hilfreiche Informationen automatisch ermittelt. Diese als nächstes greifbaren Werkstücke werden in der auf der Tafel vorzufindenden Drehlage und evtl. der Position auf der Breite des Bandes auf einem Monitor angezeigt. Die Anzeige kann z.B. auf einem großen Bildschirm oberhalb des Förderbandes, auf mehreren kleinen Bildschirmen, die unterhalb oder am Ende des Umlaufbereichs des Förderbands über die komplette Breite verteilt sind, oder auch anderweitig (VR-Brille, Headup-Display, ...) vorgenommen werden.

Nach Entnahme der vordersten Werkstücke taktet das Band automatisch oder manuell ausgelöst weiter. Die absortierten Werkstücke werden vom Werker oder automatisch vom System als entnommen verbucht. Ferner können fehlende oder beschädigte Werkstücke vom Werker verbucht werden. Diese Interaktion kann z.B. über eine Berührungseingabe auf einem die Werkstücke anzeigenden Monitor, Knöpfe, oder eine Gestensteuerung erfolgen. Das automatische Verbuchen kann beispielsweise eine Bewegungsverfolgung einer Hand des absortierenden Werkers einbeziehen. So könnte über ein Handtracking beispielsweise erkannt werden, welche Teile tatsächlich entnommen worden sind, so dass nur diese vollautomatisch verbucht werden. Weitere Verfahren zur Unterstützung eines Werkers beim Absortieren sind in der DE 20 2016 120131 A1 offenbart und können entsprechend angepasst integriert werden. Eine Interaktion des Werkers findet so z. B. nur bei einer Abweichung vom Normprozess (hier das Absortierung von Gutteilen, die den Anforderungen an die Werkstücke genügen) statt. Im Normalfall kann der Werker ungestört von z. B. Verbuchungseingaben absortieren oder diese einfach vornehmen.

Entsprechend ist eine auf Bildverarbeitung oder anderen visuellen Mitteln basierende Prüfung der tatsächlichen Entnahme der Teile nicht notwendig, da diese in verschiedensten Arbeitsumfeldern nicht oder nur fehleranfällig umgesetzt werden kann. Fehler können beispielsweise durch eine ungünstige Unterlage (Struktur oder Material des Förderbands), prozessbedinge Überlagerung von Teilen und Restgitter, undefinierte Beleuchtungsverhältnisse etc. bedingt sein.

Gemäß den hierin offenbarten Konzepten ist es nun möglich zeitnah und in Verbindung mit einem erzeugten Werkstück Informationen zum Fertigungsprozess anzuzeigen, wobei die Präsentation von beispielsweise Bildinhalten in einer Weise, die auf die physischen Gegebenheiten der menschlichen Wahrnehmung und Aufnahme von Informationen Rücksicht nimmt, erfolgt. Insbesondere ist das Darstellen von Information darauf gerichtet, die Wahrnehmung der gezeigten Informationen durch den Maschinenbediener in bestimmter Weise überhaupt erst zu ermöglichen und überdies zweckmäßig zu gestalten.

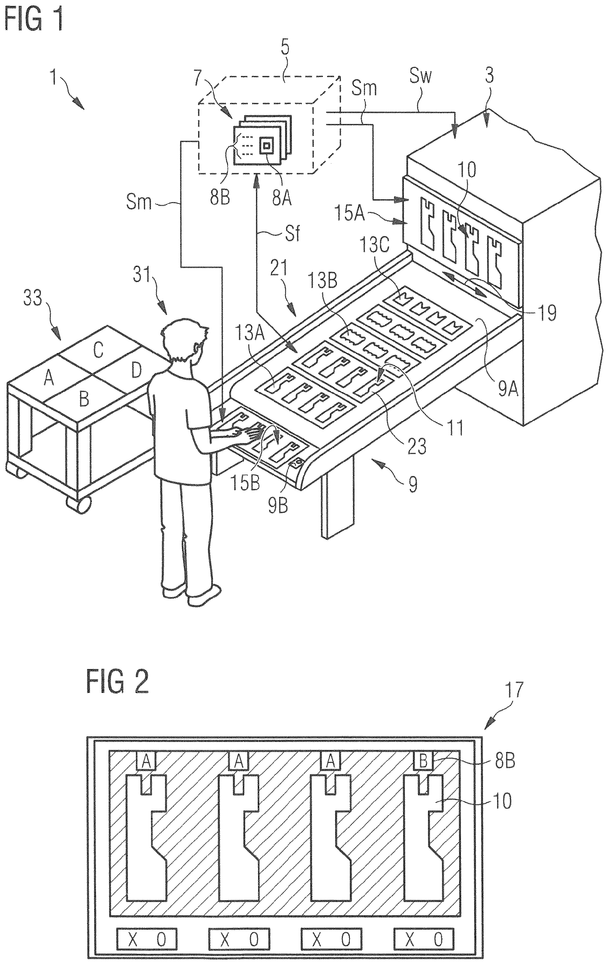

Im Folgenden wird in Verbindung mit den Figuren 1 bis 4C ein Absortierarbeitsplatz eines Fertigungssystems beschrieben, bei dem mithilfe der hierin offenbarten Konzepte das Absortieren von geschnittenen Werkstücken unterstützt wird.

Fig. 1 zeigt eine Darstellung eines beispielhaften Absortierarbeitsplatzes eines Fertigungssystem 1, bei dem Werkstücke mit einer Flachbettwerkzeugmaschine 3 erzeugt werden. Die Flachbettwerkzeugmaschine 3 ist beispielsweise eine Laserschneidmaschine, die aus einem Flachmaterial (hierin auch als Tafel bezeichnet) mit einem Laserstrahl Werkstücke in im Wesentlichen beliebig einstellbaren zweidimensionalen Formen ausschneidet. Dazu lagert in der Werkzeugmaschine das Flachmaterial z. B. auf einer Palette, über die ein Laserschneidkopf derart bewegt werden kann, dass ein aus dem Laserschneidkopf austretender Laserstrahl entlang den gewünschten Schneidkonturen geführt wird. Die Bewegung des Laserschneidkopfs wird von einer Werkzeugmaschinensteuerung 5 angesteuert. Ein Ansteuerungssignal Sw für die Werkzeugmaschine ist in Fig. 1 schematisch angedeutet. In der Werkzeugmaschinensteuerung 5 liegen die Schneidkonturen in Form eines digitalen Bearbeitungsplans 7 vor. In diesem sind die Geometrien der zu schneidenden Werkstücke, d. h., insbesondere die zu schneidenden (Außen- und Innen-) Konturen der Werkstücke, in Form von Werkstück-Geometriedaten 8A in einem Schneidplan hinterlegt.

Üblicherweise gehört zu einem Auftrag eines Kunden eine Gruppe von Werkstücken, wobei ein Auftrag weitere Informationen zu den einzelnen Werkstücken, zum Beispiel die benötigte Anzahl eines Typs eines Werkstücks und eventuell weitere nachfolgende Bearbeitungsschritte für ein Werkstück, umfasst. Entsprechend sind im Bearbeitungsplan 7 derartige werkstückspezifische Auftragsdaten 8B als Kenndaten hinterlegt. Zusätzlich können für die einzelnen Werkstücktypen Werkstück-Bilddaten 10 hinterlegt oder bei Bedarf aus den Werkstück-Geometriedaten 8A erzeugt werden.

Üblicherweise liegen nach dem Schneidvorgang die geschnittenen Werkstücke in der Form des ursprünglichen Flachmaterials als Schnittgut in der Werkzeugmaschine auf der Palette noch als (nun geschnittene) Tafel vor und sind entsprechend plattenförmig zueinander angeordnet. Die Werkstücke sind von einem sogenannten Restgitter, d. h., dem Material der Tafel, das nicht für Werkstücke genutzt werden konnte, umgeben. Die Werkstücke sind teilweise über sogenannte Mikrojoints noch mit dem Restgitter verbunden, um z. B. ein Verkippen der Werkstücke beim Transport auf dem Förderband zu verhindern.

Das Schnittgut wird maschinell oder manuell von der Palette auf eine Fördereinrichtung umgelagert und mit dieser weiteren Bearbeitungsschritten zugeführt. Dabei behält das Schnittgut möglichst die plattenförmige Anordnung bei.

In Fig. 1 wird schematisch eine Fördereinrichtung 9 gezeigt. Diese umfasst ein umlaufendes Förderband 9A, auf dem als Schnittgut 11 geschnittene Werkstücke 13A, 13B, 13C in einem Restgitter 23 angedeutet sind. Die Werkstücke 13A, 13B, 13C liegen noch in der plattenförmigen Anordnung vor und werden zu einer Absortierstelle 21 transportiert. Üblicherweise stellt eine Lichtschranke sicher, dass die Werkstücke 13A, 13B, 13C nicht über den Wendepunkt des umlaufenden Bandes 9A geführt werden. Zusätzlich kann der Antrieb des Förderbands 9A von einem Werker 31 manuell über einen Schalter 9B angesteuert werden.

Die vorderen Werkstücke 13A, 13B, 13C der plattenförmigen Anordnung liegen in Reichweite des Werkers 31, so dass dieser an der Absortierstelle 21 Zugriff auf eine beschränkte Anzahl von Werkstücken, hier die Werkstücke 13A der ersten Reihe, hat. Der Werker 31 kann diese Werkstücke 13A greifen und Ablageorten A, B, C, D zusortieren, die beispielsweise auf einer Ablagefläche eines Transportwagens 33 vorgesehen sind und zu entsprechenden Aufträgen und/oder nachfolgenden Bearbeitungsschritten gehören. Entsprechend nimmt der Werker 31 die Werkstücke 13A vom Förderband 9A auf, entfernt eventuell Mikrojoints und ordnet die Werkstücke 13A den jeweiligen Aufträgen zu. Gemäß den Aufträgen sind dazu drei der Werkstücke 13A der vordersten Reihe z. B. am Ablageorte A und eines am Ablageort B zu positionieren.

Gemäß den hierin offenbarten Konzepten wird der Absortiervorgang zur Erleichterung eines korrekten Absortierens und insbesondere zur Erhöhung der Effizienz durch ein Anzeigen einer Abfolge von Werkstück-Darstellungen und optional Auftragsinformation unterstützt. Hierzu sind ein oder mehrere Anzeigeeinheiten vorgesehen, die für den Werker 31 von der Absortierstelle 21 aus gut zu sehen sind. Beispielsweise ist in der Anordnung der Fig. 1 ein großer Monitor 15A über dem Förderband 9A positioniert, der sich bevorzugt über die Breite des Förderbands 9A erstreckt. Ferner kann vor dem Werker 31 in Verlängerung der Förderrichtung des Förderbands 9A unterhalb einer Zwischenablage oder in Ergänzung zur Zwischenablage ein Monitor 15B (evtl. mit Touch-Eingabenfunktion) angebracht werden. Alternativ oder zusätzlich können seitlich vom Förderband Anzeigen vorgesehen werden, die beispielsweise bewegbar sind und nahe der jeweiligen Ablageorte positioniert werden können.

In Fig. 1 ist angedeutet, dass die Anzeigeneinheiten (Monitor 15A, Monitor 15B) mit der Werkzeugmaschinensteuerung 5 zum Empfangen von Bildinformationen über Signalverbindungen Sm verbunden sind. Insbesondere weisen die Anzeigeneinheiten jeweils einen Prozessor zum Empfangen von auf dem zugehörigen Monitor 15A, 15B der Anzeigeeinheit auszugebenden Daten auf. In Fig. 1 ist auf den Monitoren 15A, 15B schematisch die vorderste Reihe von Werkstücken 13A, d. h., deren Werkstück-Bilddaten 10, angezeigt. In Fig. 2 ist ein Monitorbild 17 des Monitors 15A gezeigt. Neben den dargestellten Werkstück-Bilddaten 10 der Werkstücke 13A, erkennt man im Monitorbild 17 Auftragsdaten 17 oberhalb einer jeden der Werkstückedarstellungen. Beispielhaft werden die drei linken Werkstücke 13A der vordersten Reihe einem Auftrag zugeordnet, dessen Werkstücke am Ablageort "A" gesammelt werden sollen. Das rechte Werkstück ist dagegen einem Auftrag zugeordnet, der am Ablageort "B" für den nächsten Verarbeitungsschritt bereitgestellt werden soll.

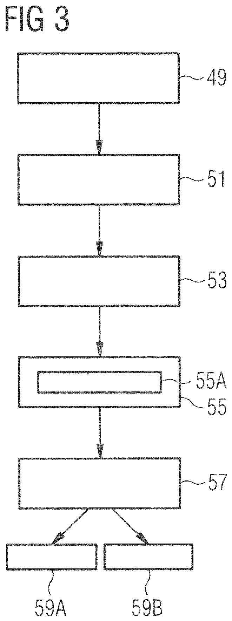

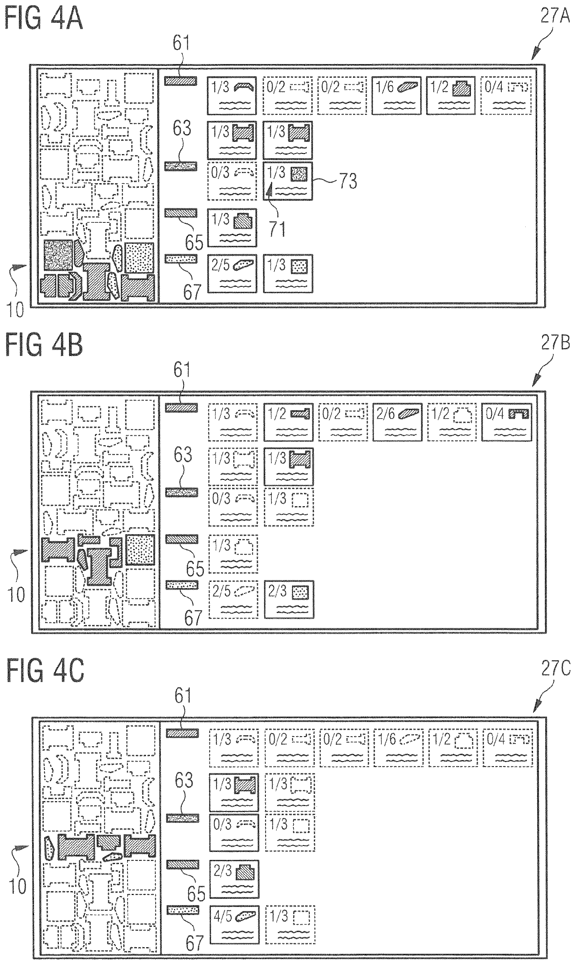

Für den Fall, dass die Anzeige als Touchscreen-Monitor (z. B. als Monitor 15B in Verlängerung der Förderspur) ausgebildet ist, können ferner Eingabefelder vorgesehen werden, wie sie beispielhaft in Fig. 2 unter den dargestellten Werkstücken skizziert sind. Beispielsweise kann eine Verbuchung "X" oder eine Markierung als Ausschussteil "0" vorgenommen werden. Details zur Darstellung von Information auf den Anzeigen (Monitor 15A, 15B) werden in Zusammenhang mit den Figuren 3 und 4A bis 4C erläutert.

Ferner ist eine Signalverbindung Sf zwischen der Werkzeugmaschinensteuerung 5 und der Fördereinrichtung 9 vorgesehen. Diese erlaubt es, zum einen den Antrieb der Fördereinrichtung 9 anzusteuern und zum anderen die genaue Positionsinformation über die Vorschubposition (Umlaufstellung) des Förderbands 9A an die Werkzeugmaschinensteuerung 5 auszugeben.

Im Flussdiagramm der Fig. 3 wird das Verfahren beispielhaft in folgende Schritte untergliedert. In einem Schritt 51 werden gefertigte Werkstücke 13A, 13B, 13C mit der Fördereinrichtung 9 zur Absortierstelle 21 transportiert. Dabei ist die Reihenfolge und die Anordnung der Werkstücke auf dem Förderband 9B aufgrund des durchgeführten Bearbeitungsplans 7 gegeben.

In einem Schritt 53 werden von der Werkzeugmaschinensteuerung 5 bereitgestellte Werkstück-Bilddaten 10 und optional Auftragsdaten 8B für die Werkstücke 13A, 13B, 13C im Prozessor einer Anzeigeeinheit, beispielsweise des Monitors 15A, empfangen.

In einem Schritt 55 werden die Werkstück-Bilddaten 10 und optional die Auftragsdaten 8B auf dem Monitor der Anzeigeneinheit derart in der Abfolge und optional der Anordnung angezeigt, dass die Abfolge und optional die Anordnung der Werkstück-Bilddaten 10 und optional der Auftragsdaten der Reihenfolge und optional der Anordnung der von der Fördereinrichtung transportierten Werkstücke 13A, 13B, 13C an der Absortierstelle 21 entspricht. Insbesondere werden die Werkstück-Bilddaten von Werkstücken angezeigt, die in einem für einen Werker 31 zugänglichen Absortierbereich 21, beispielsweise in einem Querstreifen des Förderbandes 9A im Bereich der Förderbandumkehr, liegen. Eine Querrichtung 19 ist in Fig. 1 gezeigt. Hierzu werden beispielsweise in einem dem Schritt 51 vorausgehenden Schritt 49 die Werkstücke 13A bestimmt, die zum Absortieren an der Absortierstelle, d. h., von der Absortierstelle 21 aus für den Werker 31 zugänglich positioniert sind. Dies erfolgt unter Einbezug eines im Bearbeitungsplan 7 abgelegten Schneidplans, der die Anordnung von gefertigten Werkstücken in der plattenförmigen Ausgangstafel bestimmt. Ferner können in die Bestimmung die relativen Lagen der Werkstücke 13A, 13B, 13C innerhalb der Anordnung von gefertigten Werkstücken einfließen. Um auch während des Absortiervorgangs die jeweiligen Werkstücke 13A, 13B, 13C korrekt bestimmen zu können, geht ferner ein Vorschubwert des Förderbands 9A (eine Förderstellung der Fördereinrichtung) in die Bestimmung der als nächstes abzusortierenden Werkstücke (Werkstücke 13A in Fig. 1) ein.

Im Monitorbild können die Werkstück-Bilddaten mit einer Ausrichtung, die der Ausrichtung im Schneidplan entspricht, und an einer Position entlang der Querrichtung 19 des Förderbands 9A als schematisierte Werkstück-Darstellungen angezeigt werden (Schritt 55A). Auch hierfür kann der Bearbeitungsplan 7 oder der von der Fördervorrichtung bereits vorgenommene Transportweg der Werkstücke (die Förderbandstellung) berücksichtigt werden.

In einigen Ausführungsformen kann die Aktivierung der Fördervorrichtung durch den Werker 31 dazu genutzt werden, weitere Werkstücke 13B an die Absortierstelle 21 zu transportieren. Dazu kann beispielsweise eine neue Vorschubposition des Förderbands 9A manuell angesteuert werden. Zugleich oder im Anschluss kann eine automatische Verbuchung derjenigen Werkstücke erfolgen, die vom Förderband absortiert worden sein müssten (Schritt 57). D. h., die Werkstücke, die bei der zuvor eingenommenen Vorschubposition zur Absortierstelle 21 transportiert wurden (und damit im Griffbereich der Reichweite des Werkers 31 lagen), werden (evtl. sogar vollautomatisch) als verbucht registriert. Unter Umständen kann hierzu eine Bestätigung durch den Werker 31 erforderlich sein (Schritt 59B).

Das Förderband 9A kann vom Werker 31 im Vorschub angesteuert werden; d. h., der Werker 31 kann das Förderband 9A anhalten und schrittweise Werkstücke in den Absortierbereich bewegen. Die Einnahme einer neuen Vorschubposition kann automatisch oder manuell von einem Werker 31 veranlasst werden. Automatisch kann dies beispielsweise dann erfolgen, wenn eine Lichtschranke am Ende des Förderbands 9A aufgrund des Entfernens der entsprechenden Werkstücke und des Restgitters freigegeben wird. Hierbei kann beispielsweise eine Zeitverzögerung der Freigabe vorgesehen werden.

Ergänzend kann ein Verifizieren der automatisierten Verbuchungen von entnommenen Teilen mittels Bilderfassung der entnommenen Teile und/oder eines Restgitters oder Restgitterabschnitts in einem Schritt 59A erfolgen. Die Bilderfassung kann ferner dazu ausgebildet sein, zu erkennen, ob alle Werkstücke im Bereich der Absortierstelle 21 absortiert und Ablageorten zugeordnet wurden. Wenn ja, kann dies eine Ansteuerung der Fördereinrichtung 9 auslösen, die bewirkt, dass weitere Werkstücke zur Absortierstelle 21 transportiert werden.

In den Figuren 4A bis 4C sind Monitorbilder 27A, 28B, 27C gezeigt, die drei aufeinanderfolgenden Schritten von Förderbandvorschub-Positionen entsprechen. In den Monitorbildern 27A, 27B, 27C sind die Werkstück-Bilddaten 10 als Umrisse der jeweils abzusortierenden Werkstücke auf der linken Seite der Monitorbilder 27A, 28B, 27C gezeigt. Die Werkstück-Bilddaten der nicht abzusortierende Werkstücke können nur leicht oder gar nicht dargestellt werden. Die Darstellung entspricht beispielsweise der Anordnung und Reihenfolge der geschnittenen Werkstücke, wie sie im Schneidplan vorgesehen ist und beim Transport mit der Fördereinrichtung beibehalten wurde.

Zusätzlich werden auf der rechten Seite der Monitorbilder 27A, 28B, 27C Informationen über vier nachfolgende Bearbeitungsschritte und Aufträge dargestellt. Die Bearbeitungsschritte sind z. B. 61 "Biegen", 63 "Entgraten", 65 "Schweißen" und 67 "Versand". Beispielhaft sind in den Monitorbildern 27A, 28B, 27C für jeden nachfolgenden Bearbeitungsschritt die Werkstück-Bilddaten 10 nebeneinander einzeln aufgeführt und mit Kenndaten der Aufträge, z. B. mit einer benötigten Anzahl 71 von Werkstücken (evtl. im Vergleich mit der bereits absortierten Anzahl) und einer Auftragsnummer 73, versehen.

Die Werkstück-Bilddaten sind in den Figuren 4A bis 4C mit keiner bzw. mit unterschiedlichen Füllungen (Schraffuren, Punktierung) gekennzeichnet, um den Bezug zu den Bearbeitungsschritten kenntlich zu machen. Dies kann am Monitor beispielsweise auch durch eine entsprechende Farbgebung erfolgen.

In den Figuren 4A bis 4C sind diejenigen Werkstücke, die zum jeweiligen Zeitpunkt in Reichweite des Werkers 31 liegen, auf der rechten Seite der Monitorbilder 27A, 28B, 27C hervorgehoben dargestellt. Die nicht zum jeweiligen Zeitpunkt abzusortierenden Werkstücke werden nur informativ gezeigt, z. B. in blassen Farben oder gestrichelt.

So erkennt man zum Verfahrensschritt 61 "Biegen" in Fig. 4A Werkstück-Bilddaten für fünf Typen von Werkstücken, die für den Werker 31 erreichbar sind. Für die nachfolgenden Bearbeitungsschritte 63 "Entgraten" und 65 "Schweißen" ist jeweils ein Werkstück abzusortieren. Für den Verfahrensschritt 67 "Versand" sind zwei gleiche und ein weiteres Werkstück abzusortieren.

Wurden alle Werkstücke aus dem Restgitter gelöst und vom Förderband entfernt, kann der Werker 31 die nächste Gruppe von Werkstücken zu sich befördern lassen. In dieser nächsten Vorschubposition sind vier unterschiedliche Typen von Werkstücken für den Bearbeitungsschritten 61 "Biegen" abzusortieren und ein Werkstück für den Bearbeitungsschritt 67 "Versand".

Sind diese Werkstücke absortiert und den entsprechenden Ablageorten zugeordnet, wird der Werker 31 wiederum das Förderband aktivieren und nun anhand der in Fig. 4C gezeigten Werkstück-Bilddaten die nächsten Werkstücke absortieren.

Auf diese Weise können nach und nach Informationen zu den gemäß den Bearbeitungsplänen hergestellten Anordnungen von Werkstücken unter Nutzung der bekannten Lagen der Werkstücke für den Werker ausgegeben werden und diese dann vom Förderband absortiert werden.

Zur Vollständigkeit wird darauf hingewiesen, dass alternativ oder ergänzend über jeweiligen Werkstücken angezeigt werden kann, wie viele von der Art bereits absortiert wurden und wie viele von ihnen noch fehlen. Ferner wird darauf hingewiesen, dass in den Figuren 4A bis 4C deutlich wird, dass gleiche Typen von geschnittenen Werkstücken unterschiedlichen Bearbeitungsschritten zugeordnet sein können. Erkennt dies der Werker 31, kann er auch vom Absortierplan, wie er von der Werkzeugmaschinensteuerung vorgeschlagen wird, abweichen und er kann beispielsweise einen Auftrag bevorzugt abschließen.

Wie beschrieben bringt das Förderband auf diese kontrollierte Weise die auf den Monitoren dargestellten Werkstücke in Griffweite des Werkers. Des Weiteren kann im Bearbeitungsplan bereits eine Gruppe von abzusortierenden Werkstücken einem Restgitterabschnitt zugeordnet sein. Ein derartiger Restgitterabschnitt kann mit einem oder mehreren Untergliederungsschnitten von anderen Restgitterabschnitten abgetrennt worden sein. Für diese Gruppe kann eine einheitliche Vorschubposition des Förderbands für den Absortiervorgang vorgesehen werden, in der die zugehörigen Werkstücke an der Absortierstelle im Griffbereich des Werkers liegen. Im Prozessor der Anzeigeeinheit können die Werkstück-Bilddaten und optional die Auftragsdaten für diese Werkstücke gemeinsam übertragen und empfangen werden, sodass sie entsprechend auf dem Monitor angezeigt werden. Beispiele für derartige Gruppen von Werkstücken sind die in den Figuren 4A bis 4C gezeigten Werkstücke, falls diesen ein gemeinsamer Restgitterabschnitt zugeordnet wurde.

Ein Restgitterabschnitt wird dabei eine Vorderkante aufweisen, die die Vorschubposition des Förderbands für die Positionierung der zugehörigen Gruppe der Werkstücke an der Absortierstelle 21 definieren kann. Beispielsweise kann, wurde ein vorausgehender Restgitterabschnitt entfernt, die Fördereinrichtung solange aktiviert werden, bis das Förderband zu der Position bewegt wird, in der die Vorderkante beispielsweise eine Lichtschranke auslöst.

Des Weiteren wird zur Vollständigkeit erwähnt, dass im Absortiervorgang die jeweiligen Werkstücke beispielsweise auf einer Zwischenablage vorübergehend abgelegt werden können, um dann gemeinsam an den Ablageort gebracht zu werden. Die Zwischenablage kann beispielsweise ein Bereich auf dem dargestellten Ablagetisch am Umkehrpunkt sein oder eine andere Art von Sammelbehälter bzw. bei großen Werkstücken jeweils eigene Paletten. Auch die Restgitter können entsprechend auf Paletten oder Sammelbehältern abgelegt werden.

Es wird explizit betont, dass alle in der Beschreibung und/oder den Ansprüchen offenbarten Merkmale im Rahmen der ursprünglich offenbarten Anmeldung als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Verfahren zum einen Absortiervorgang unterstützenden Anzeigen einer Abfolge von Werkstück-Darstellungen und optional Auftragsinformation bei der Fertigung von Werkstücken (13A, ...), insbesondere von Blechbauteilen, mit einem Fertigungssystem (1), wobei das Fertigungssystem (1) aufweist
eine Werkzeugmaschinensteuerung (5), in der einem jeden der Werkstücke (13A, ...) zugeordnete Werkstück-Bilddaten (10) und optional Auftragsdaten (8B) als Teil eines maschinenlesbaren Bearbeitungsplans (7) abgelegt sind, wobei für jedes Werkstück (13A,...) die Werkstück-Bilddaten (10) eine auf Geometriedaten (8A) der zu fertigenden Werkstücke (13A, ...) basierende Darstellung und die optionalen Auftragsdaten (8B) Kenndaten eines zum Werkstück (13A, ...) gehörenden Fertigungsauftrags umfassen,
eine Flachbettwerkzeugmaschine (3), mit der die Werkstücke (13A, ...) aus einem plattenförmigen Ausgangsmaterial gemäß dem maschinenlesbaren Bearbeitungsplan (7) gefertigt werden,
eine Fördereinrichtung (9) mit einem Förderband (9A), mit der die Werkstücke (13A, ...) als Schnittgut (11) auf dem Förderband (9A) zum Absortieren der Werkstücke (13A, ...) zu einer Absortierstelle (21) transportiert werden, wobei das Schnittgut (11) plattenförmig angeordnet von der Fördereinrichtung (9) befördert wird, und
eine Anzeigeeinheit mit einem Prozessor zum Empfangen von auf einem Monitor (15A, 15B) der Anzeigeeinheit auszugebenden Daten, wobei der Monitor (15A, 15B) im Bereich der Fördereinrichtung, insbesondere nahe der Absortierstelle (21), angeordnet ist, wobei das Verfahren die folgenden Schritte umfasst:
Transportieren (Schritt 51) von gefertigten Werkstücken (13A, ...) mit der Fördereinrichtung (9) auf dem Förderband (9A) gemäß einer vom Bearbeitungsplan (7) vorgegebenen Reihenfolge und Anordnung zur Absortierstelle (21),
Bestimmen (Schritt 49) der Werkstücke (13A, ...), die zum Absortieren an der Absortierstelle (21) positioniert sind, unter Einbezug eines Vorschubwertes des Förderbands (9A) der Fördereinrichtung (9).
Empfangen (Schritt 53) von von der Werkzeugmaschinensteuerung (5) bereitgestellten Werkstück-Bilddaten (10) und optional Auftragsdaten (8B) für die Werkstücke (13A, ...), die zur Absortierstelle (21) transportiert werden, im Prozessor der Anzeigeeinheit und
Anzeigen (Schritt 55) der Werkstück-Bilddaten (10) und optional der Auftragsdaten (8B) auf dem Monitor (15A, 15B) der Anzeigeeinheit in einer Abfolge und optional einer Anordnung derart, dass die Abfolge und optional die Anordnung der Werkstück-Bilddaten (10) und/ optional der Auftragsdaten (8B) der Reihenfolge und optional der Anordnung der von der Fördereinrichtung (9) zur Absortierstelle (21) transportierten Werkstücke (13A, ...) auf dem Förderband (9A) entspricht.

2. Verfahren nach Anspruch 1, wobei die Werkstück-Bilddaten (8A) auf dem Monitor als ein Monitorbild (17) angezeigt werden, das vollständige oder nur teilweise Werkstück-Darstellungen nur von denjenigen Werkstücken (13A, ...) umfasst oder hervorhebt, die in einem von einem Werker (31) absortierbaren Bereich, beispielsweise in einem Querstreifen des Förderbandes (9A) im Bereich einer Förderbandumkehr, liegen.

3. Verfahren nach Anspruch 1 oder 2, wobei die Werkstücke (13A, ...), die zum Absortieren an der Absortierstelle (21) positioniert sind, ferner unter Einbezug eines im Bearbeitungsplan (7) abgelegten Schneidplans bestimmt werden, wobei der Schneidplan die Anordnung von gefertigten Werkstücken (13A, ...) im plattenförmigen Ausgangsmaterial bestimmt, insbesondere unter Einbezug von relativen Lagen der Werkstücke (13A, ...) innerhalb der Anordnung von gefertigten Werkstücken (13A, ...),.

4. Verfahren nach Anspruch 3, wobei die Werkstück-Bilddaten (10) mit einer Ausrichtung und/oder an einer Position entlang einer Querrichtung (19) eines Förderbands (9A) der Fördereinrichtung (9) als Werkstück-Darstellungen (15) angezeigt werden, wobei die Ausrichtung und/oder Position einer der Werkstück-Darstellungen unter Einbezug des Bearbeitungsplans (7) und/oder unter Einbezug eines von der Fördervorrichtung (9) bereitgestellten Transportwegs für die Absortierstelle (21) bestimmt wird (Schritt 55A).

5. Verfahren nach einem der vorgehenden Ansprüche, wobei, wenn die Fördervorrichtung (9) dazu aktiviert wird, eine neue Vorschubposition eines Förderbands (9A) der Fördereinrichtung (9) einzunehmen, um weitere Werkstücke (13A, ...) an die Absortierstelle (21) zu transportieren, eine Verbuchung derjenigen Werkstücke (13A, ...) als vom Förderband (9A) absortiert automatisiert vorgenommen wird (Schritt 57), die bei der zuvor eingenommenen Vorschubposition an die Absortierstelle (21) transportiert worden waren.

6. Verfahren nach Anspruch 5, wobei die Aktivierung der Fördereinrichtung (9) zur Einnahme der neuen Vorschubposition automatisch, insbesondere durch ein beispielsweise verzögertes Freigeben einer Lichtschranke am Ende des Förderbands, ausgelöst wird, oder manuell von einem Werker (31) vorgenommen wird.

7. Verfahren nach einem der vorgehenden Ansprüche, wobei gemäß dem Bearbeitungsplan (7) Gruppen von abzusortierenden Werkstücken (13A, ...) erzeugt werden, denen jeweils ein Abschnitt eines die Werkstücke (13A, ...) umgebenden Restgitters (23) zugeordnet ist, in dem die abzusortierenden Werkstücke (13A, ...) einer Gruppe angeordnet sind, wobei aufeinanderfolgende Restgitterabschnitte jeweils mit einem Untergliederungsschnitt voneinander getrennt sind, und
wobei die Werkstücke (13A, ...) einer Gruppe mit einer einheitlichen Vorschubposition eines Förderbands (9A) der Fördereinrichtung (9) an die Absortierstelle (21) transportiert werden,
im Prozessor Werkstück-Bilddaten (10) und optional Auftragsdaten (8B) für die Werkstücke (13A, ...) der Gruppe, die zuletzt zur Absortierstelle (21) transportiert wurde, empfangen werden und
die Werkstück-Bilddaten (10) und optional Auftragsdaten (8B) der Werkstücke (13A, ...) der Gruppe, die zuletzt zur Absortierstelle (21) transportiert wurde, auf der Anzeigeeinheit angezeigt werden.

8. Verfahren nach Anspruch 7, wobei der Restgitterabschnitt einer Gruppe eine Vorderkante aufweist, die die Vorschubposition eines Förderbands (9A) der Fördereinrichtung (9) für die Positionierung der Gruppe an der Absortierstelle (21) definiert,
wobei das Förderband (9A) der Fördereinrichtung (9) solange bewegt wird, bis erkannt wird, dass die Vorderkante des Restgitterabschnitts eine vorbestimmte Förderposition eingenommen hat.

9. Verfahren nach einem der vorgehenden Ansprüche, ferner mit
Verifizieren von automatisierten Verbuchungen (Schritt 59A) von entnommenen Werkstücken in der Werkzeugmaschinensteuerung (5) mittels Bilderfassung der entnommenen Werkstücke und/oder eines Restgitters (23) oder Restgitterabschnitts oder
benutzergesteuertem Verifizieren von automatisierten Verbuchungen (Schritt 59B) von entnommenen Werkstücken in der Werkzeugmaschinensteuerung (5) und
insbesondere Erkennen, dass alle Werkstücke im Bereich der Absortierstelle (21) absortiert wurden, und Ansteuern der Fördereinrichtung (9), um weitere Werkstücke zur Absortierstelle (21) zu transportieren.

10. Fertigungssystem (1) zur Fertigung von Werkstücken (13A, ...), insbesondere von Blechbauteilen, mit:
einer Werkzeugmaschinensteuerung (5), in der jedem der zu fertigenden Werkstücke (13A, ...) zugeordnete Werkstück-Bilddaten (10) und optional Auftragsdaten (8B) als Teil eines maschinenlesbaren Bearbeitungsplans (7) abgelegt sind, wobei für jedes Werkstück (13A,...) die Werkstück-Bilddaten (10) eine auf Planungsdaten der Werkstücke (32A, ...) basierende Werkstück-Darstellung und optional die Auftragsdaten (8B) Kenndaten eines zum Werkstück (13A, ...) gehörenden Fertigungsauftrags umfassen,
einer Flachbettwerkzeugmaschine (3), mit der die Werkstücke (13A, ...) aus einem plattenförmigen Ausgangsmaterial gemäß dem maschinenlesbaren Bearbeitungsplan (7) gefertigt werden,
einer Fördereinrichtung (9), mit der die Werkstücke (13A, ...) als Schnittgut (11) zum Absortieren der Werkstücke (13A, ...) zu einer Absortierstelle (21) transportiert werden, wobei das Schnittgut (11) plattenförmig angeordnet von der Fördereinrichtung (9) befördert wird, und
einer Anzeigeeinheit mit einem Prozessor zum Empfangen von auf einem Monitor (15A, 15B) der Anzeigeeinheit auszugebenden Daten, wobei
der Monitor (15A, 15B) von der Absortierstelle (21) aus sichtbar angeordnet ist oder als Virtual-reality-Brille oder als Head-up-Display-Anzeigensystem ausgebildet ist,
der Prozessor zum Empfangen von von der Werkzeugmaschinensteuerung (5) bereitgestellten Werkstück-Bilddaten (8A) und optional Auftragsdaten (8B) für die Werkstücke (13A, ...), die zur Absortierstelle (21) transportiert werden, ausgebildet ist, und
der Monitor (15A, 15B) derart gemäß einem Verfahren nach einem der Ansprüche 1 bis 9 ansteuerbar ist, dass die Werkstück-Bilddaten (10) und optional die Auftragsdaten (8B) auf dem Monitor (15A, 15B) in einer Abfolge und optional einer Anordnung derart angezeigt werden, dass die Abfolge und optional die Anordnung der Werkstück-Bilddaten (10) und optional die Auftragsdaten (8B) der Reihenfolge und optional der Anordnung der von der Fördereinrichtung (9) zur Absortierstelle (21) transportierten Werkstücke (13A, ...) entspricht.

11. Fertigungssystem (1) nach Anspruch 10, wobei der Monitor (15A) im Bereich der Fördereinrichtung (9), insbesondere oberhalb eines Förderbands (9A), und/oder im Bereich der Absortierstelle (21) angeordnet ist oder
wobei der Monitor (15B) einen oder mehrere kleine Bildschirme unterhalb eines Umkehrpunkts eines Fertigungsbands (9A) im Bereich der Absortierstelle (21) umfasst.

## Claims

1. A method for displaying a sequence of workpiece representations to support a sorting process and optional order information in the production of workpieces (13A, etc.), in particular sheet metal components, with a production system (1), the production system (1) having
a machine tool controller (5) in which workpiece image data (10) assigned to each of the workpieces (13A, etc.) and, optionally, order data (8B) are stored as part of a machine-readable processing plan (7) wherein, for each workpiece (13A, etc.), the workpiece image data (10) comprise a representation based on geometry data (8A) of the workpieces (13A, etc.) to be produced and the optional order data (8B) comprise characteristic data of a production order associated with the workpiece (13A, etc.),
a flat bed machine tool (3) with which the workpieces (13A, etc.) are produced from a plate-shaped starting material according to the machine-readable processing plan (7),
a conveyor device (9) having a conveyor belt (9A), with which the workpieces (13A, etc.) are transported to a sorting point (21) as cuttings (11) on the conveyor belt (9A) for sorting the workpieces (13A, etc.), wherein the cuttings (11) are conveyed by the conveyor device (9) arranged in plate form, and
a display unit having a processor for receiving data to be output on a monitor (15A, 15B) of the display unit, wherein the monitor (15A, 15B) is arranged in the area of the conveyor device, in particular near the sorting point (21), the method comprising the following steps:
transporting (step 51) produced workpieces (13A, etc.) to the sorting point (21) on the conveyor belt (9A) with the conveyor device (9) according to a sequence and arrangement specified by the processing plan (7),
determining (step 49) the workpieces (13A, etc.) that are positioned for sorting at the sorting point (21), taking into account a feed value of the conveyor belt (9A) of the conveyor device (9).
receiving (step 53) of workpiece image data (10) provided by the machine tool controller (5) and, optionally, order data (8B) for the workpieces (13A, etc.), which are transported to the sorting point (21), in the processor of the display unit, and
displaying (step 55) the workpiece image data (10) and, optionally, the order data (8B) on the monitor (15A, 15B) of the display unit in a sequence and, optionally, an arrangement such that the sequence and, optionally, the arrangement of the workpiece image data (10) and/optionally the order data (8B) corresponds to the order and, optionally, the arrangement of the workpieces (13A, etc.) transported to the sorting point (21) on the conveyor belt (9A) by the conveyor device (9).

2. The method according to claim 1, wherein the workpiece image data (8A) are displayed on the monitor as a monitor image (17) which comprises or highlights complete or only partial workpiece representations of only those workpieces (13A, etc.) which are in an area sortable by a worker (31), for example in a transverse strip of the conveyor belt (9A) in the area of a conveyor belt reversal.

3. The method according to claim 1 or 2, wherein the workpieces (13A, etc.) that are positioned for sorting at the sorting point (21) are further determined taking into account a cutting plan stored in the processing plan (7), wherein the cutting plan determines the arrangement of produced workpieces (13A, etc.) in the plate-shaped starting material, in particular taking into account the relative positions of the workpieces (13A, etc.) within the arrangement of produced workpieces (13A, etc.).

4. The method according to claim 3, wherein the workpiece image data (10) are displayed as workpiece representations (15) with an orientation and/or at a position along a transverse direction (19) of a conveyor belt (9A) of the conveyor device (9), wherein the orientation and/or position of one of the workpiece representations is determined for the sorting point (21), taking into account the processing plan (7) and/or a transport path provided by the conveyor device (9) (step 55A).

5. The method according to any one of the preceding claims wherein, when the conveyor device (9) is activated to assume a new feed position of a conveyor belt (9A) of the conveyor device (9) in order to transport further workpieces (13A, etc.) to the sorting point (21), a booking of those workpieces (13A, etc.), which had been transported to the sorting point (21) at the feed position previously assumed, is set to sorted by the conveyor belt (9A) automatically (step 57).

6. The method according to claim 5, wherein the activation of the conveyor device (9) to assume the new feed position is triggered automatically, in particular by a delayed release of a light barrier at the end of the conveyor belt, for example, or is carried out manually by a worker (31).

7. The method according to any one of the preceding claims wherein, according to the processing plan (7), groups of workpieces (13A, etc.) to be sorted are generated, each of which is assigned a section of a skeleton (23) surrounding the workpieces (13A, etc.), wherein the workpieces (13A, etc.) of a group are arranged, wherein successive skeleton sections are separated from one another by a subdividing cut, and
wherein the workpieces (13A, etc.) of a group are transported to the sorting point (21) with a uniform feed position of a conveyor belt (9A) of the conveyor device (9),
workpiece image data (10) and, optionally, order data (8B) for the workpieces (13A, etc.) of the group that was last transported to the sorting point (21) are received in the processor, and
the workpiece image data (10) and, optionally, order data (8B) of the workpieces (13A, etc.) of the group that was last transported to the sorting point (21) are displayed on the display unit.

8. The method according to claim 7, in which the skeleton section of a group has a front edge which defines the feed position of a conveyor belt (9A) of the conveyor device (9) for positioning the group at the sorting point (21),
wherein the conveyor belt (9A) of the conveyor device (9) is moved until it is detected that the front edge of the skeleton section has assumed a predetermined conveying position.

9. The method according to any one of the preceding claims, further comprising
verifying automated bookings (step 59A) of removed workpieces in the machine tool controller (5) by means of image acquisition of the removed workpieces and/or a skeleton (23) or skeleton section, or
user-controlled verifying of automated bookings (step 59B) of removed workpieces in the machine tool control (5), and
in particular detecting that all workpieces in the area of the sorting point (21) have been sorted, and controlling the conveyor device (9) to transport further workpieces to the sorting point (21).

10. A production system (1) for producing workpieces (13 A, etc.), in particular sheet metal components, comprising:
a machine tool controller (5) in which workpiece image data (10) assigned to each of the workpieces (13A, etc.) to be produced and, optionally, order data (8B) are stored as part of a machine-readable processing plan (7), wherein, for each workpiece (13A, etc.), the workpiece image data (10) comprise a workpiece representation based on planning data of the workpieces (32A, etc.) and, optionally, the order data (8B) comprise characteristic data of a production order associated with the workpiece (13A, etc.),
a flat bed machine tool (3) with which the workpieces (13A, etc.) are produced from a plate-shaped starting material according to the machine-readable processing plan (7),
a conveyor device (9), with which the workpieces (13A, etc.) are transported to a sorting point (21) as cuttings (11) for sorting the workpieces (13A, etc.), wherein the cuttings (11) are conveyed by the conveyor device (9) arranged in plate form, and
a display unit having a processor for receiving data to be output on a monitor (15A, 15B) of the display unit, wherein
the monitor (15A, 15B) is arranged to be visible from the sorting point (21) or is designed as virtual reality glasses or as a head-up display system,
the processor is designed for receiving workpiece image data (8A) provided by the machine tool controller (5) and, optionally, order data (8B) for the workpieces (13A, etc.), which are transported to the sorting point (21), and
the monitor (15A, 15B) can be controlled in accordance with a method according to any one of claims 1 to 9 such that there are displayed on the monitor (15A, 15B) the workpiece image data (10) and, optionally, the order data (8B) in a sequence and, optionally, an arrangement such that the sequence and, optionally, the arrangement of the workpiece image data (10) and optionally the order data (8B) corresponds to the order and, optionally, the arrangement of the workpieces (13A, etc.) transported to the sorting point (21) by the conveyor device (9).

11. The production system (1) according to claim 10, wherein the monitor (15A) is arranged in the area of the conveyor device (9), in particular above a conveyor belt (9A), and/or in the area of the sorting point (21), or
wherein the monitor (15B) comprises one or more small screens below a reversal point of a production line (9A) in the area of the sorting point (21).

## Revendications

1. Procédé permettant d'afficher, de manière à assister un processus de tri, d'une séquence de représentations de pièces et, éventuellement, des informations d'ordre lors de la fabrication de pièces (13A, ...), en particulier de composants en tôle, au moyen d'un système de fabrication (1), dans lequel le système de fabrication (1) comporte
une commande de machine-outil (5) dans laquelle des données d'image de pièce (10) affectées à chacune des pièces (13A, ...) respectives et, éventuellement, des données d'ordre (8B) sont enregistrées en tant que partie d'un plan d'usinage (7) lisible par machine, dans lequel pour chaque pièce (13A, ...), les données d'image de pièce (10) comprennent une représentation basée sur les données géométriques (8A) des pièces (13A, ...) à usiner et les données d'ordre (8B) éventuelles comprennent des données caractéristiques d'un ordre de fabrication correspondant à la pièce (13A, ...),
une machine-outil à banc plat (3) au moyen de laquelle les pièces (13A, ...) sont fabriquées à partir d'une matière de départ en forme de plaque selon le plan d'usinage (7) lisible par machine,
un dispositif de transport (9) comportant une bande transporteuse (9A), au moyen de laquelle les pièces (13A, ...) sont transportées en tant que produit à découper (11) sur la bande transporteuse (9A) pour trier les pièces (13A, ...), vers un poste de tri (21), dans lequel le produit à découper (11) est transporté, de manière à être disposé sous forme de plaques, par le dispositif de transport (9), et
une unité d'affichage comportant un processeur pour recevoir des données à sorties sur un moniteur (15A, 15B) de l'unité d'affichage, dans lequel le moniteur (15A, 15B) est disposé dans la zone du dispositif de transport, en particulier à proximité du poste de tri (21), dans lequel le procédé comprend les étapes suivantes :
le transport (étape 51) des pièces (13A, ...) finies au moyen du dispositif de transport (9) sur la bande transporteuse (9A), selon une séquence et une disposition spécifiées sur le plan d'usinage (7), jusqu'au poste de tri (21),
la détermination (étape 49) des pièces (13A, ...), lesquelles sont positionnées pour le tri au poste de tri (21), en tenant compte d'une valeur d'avance de la bande transporteuse (9A) du dispositif de transport (9).
la réception (étape 53) des données d'image de pièce (10) fournies par la commande de machine-outil (5) et, éventuellement, des données d'ordre (8B) pour les pièces (13A, ...), lesquelles sont transportées vers le poste de tri (21), par le processeur de l'unité d'affichage, et
l'affichage (étape 55) des données d'image de pièce (10) et, éventuellement, des données d'ordre (8B) sur le moniteur (15A, 15B) de l'unité d'affichage dans une séquence et, éventuellement, dans une disposition de telle sorte que la séquence et, éventuellement, la disposition des données d'image de pièce (10) et / éventuellement les données d'ordre (8B) correspondent à la séquence et, éventuellement, à la disposition des pièces (13A, ...) transportées par le dispositif de transport (9) jusqu'au poste de tri (21) sur la bande transporteuse (9A).

2. Procédé selon la revendication 1, dans lequel les données d'image de pièce (8A) sont affichées sur le moniteur sous la forme d'une image de moniteur (17), laquelle comprend ou met en évidence des représentations de pièce complètes ou seulement partielles des seules pièces (13A, ...) lesquelles se trouvent dans une zone pouvant être triée par un ouvrier (31), par exemple, dans une lamelle transversale de la bande transporteuse (9A) dans la zone d'un retournement de la bande transporteuse.

3. Procédé selon la revendication 1 ou 2, dans lequel les pièces (13A, ...), lesquelles sont positionnées pour le tri au poste de tri (21), sont également déterminées en tenant compte d'un plan de coupe enregistré dans le plan d'usinage (7), dans lequel le plan de coupe détermine la disposition des pièces (13A, ...) fabriquées dans la matière de départ en forme de plaque, en particulier en tenant compte des positions relatives des pièces (13A, ...) à l'intérieur de la disposition des pièces (13A, ...) fabriquées.

4. Procédé selon la revendication 3, dans lequel les données d'image de pièce (10) sont affichées avec une orientation et/ou à une position le long d'une direction transversale (19) d'une bande transporteuse (9A) du dispositif de transport (9), en tant que représentations de pièce (15), dans lequel l'alignement et/ou la position de l'une des représentations de pièce est déterminé en tenant compte du plan d'usinage (7) et/ou en tenant compte d'un chemin de transport fourni par le dispositif de transport (9) pour le poste de tri (21) (étape 55A).

5. Procédé selon l'une quelconque des revendications précédentes, dans lequel, lorsque le dispositif de transport (9) est activé pour prendre une nouvelle position d'avance d'une bande transporteuse (9A) du dispositif de transport (9) afin de transporter d'autres pièces (13A, ...) vers le poste de tri (21), une comptabilisation des pièces (13A, ...) triées sur la bande transporteuse (9A) est automatiquement effectuée (étape 57), lesquelles avaient été transportées vers le poste de tri (21) depuis la position d'avance prise auparavant.

6. Procédé selon la revendication 5, dans lequel l'activation du dispositif de transport (9) pour prendre la nouvelle position d'avance est déclenchée automatiquement, en particulier, par exemple, par une libération différée d'une barrière lumineuse à l'extrémité de la bande transporteuse, , ou est effectuée manuellement par un ouvrier (31).

7. Procédé selon l'une quelconque des revendications précédentes, dans lequel, selon le plan d'usinage (7), des groupes de pièces (13A, ...) à trier sont générés, auxquels respectivement est attribuée une section d'une grille résiduelle (23) entourant l'une des pièces (13A, ...), dans laquelle sont disposées les pièces (13A, ...) à trier d'un groupe, dans lequel les sections de grille résiduelle successives sont respectivement séparées les unes des autres par une coupe de subdivision, et
dans lequel les pièces (13A, ...) d'un groupe sont transportées, avec une position d'avance uniforme d'une bande transporteuse (9A) du dispositif de transport (9), vers le poste de tri (21),
dans le processeur, les données d'image de pièce (10) et, éventuellement, les données d'ordre (8B) pour les pièces (13A, ...) du groupe, lequel a été transporté en dernier vers le poste de tri (21), sont reçues, et
les données d'image de pièce (10) et, éventuellement, les données d'ordre (8B) des pièces (13A, ...) du groupe, lequel a été transporté en dernier vers le poste de tri (21), sont affichées sur l'unité d'affichage.

8. Procédé selon la revendication 7, dans lequel la section de grille résiduelle d'un groupe comporte un bord avant, lequel définit la position d'avance d'une bande transporteuse (9A) du dispositif de transport (9) pour le positionnement du groupe au poste de tri (21),
dans lequel la bande transporteuse (9A) du dispositif de transport (9) est déplacée jusqu'à ce qu'il soit reconnu que le bord avant de la section de grille résiduelle a pris une position de transport prédéterminée.

9. Procédé selon l'une quelconque des revendications précédentes, comprenant en outre
la vérification des comptabilisations automatisées (étape 59A) des pièces prélevées dans la commande de machine-outil (5) au moyen d'une génération d'image des pièces prélevées et/ou d'une grille résiduelle (23) ou d'une section de grille résiduelle ou
la vérification commandée par l'utilisateur des comptabilisations automatisées (étape 59B) des pièces prélevées dans la commande de la machine-outil (5) et
en particulier, la détection que toutes les pièces dans la zone du poste de tri (21) ont été triées, et la commande du dispositif de transport (9) afin de transporter d'autres pièces vers le poste de tri (21).

10. Système de fabrication (1) destiné à la fabrication de pièces (13 A, ...), en particulier de composants en tôle, comportant :
une commande de machine-outil (5) dans laquelle des données d'image de pièce (10) affectées à chacune des pièces (13A, ...) respectives et, éventuellement, des données d'ordre (8B) sont enregistrées en tant que partie d'un plan d'usinage (7) lisible par machine, dans lequel pour chaque pièce (13A, ...), les données d'image de pièce (10) comprennent une représentation basée sur les données de planification des pièces (32A, ...) à usiner et les données d'ordre (8B) éventuelles comprennent des données caractéristiques d'un ordre de fabrication correspondant à la pièce (13A, ...),
une machine-outil à banc plat (3) au moyen de laquelle les pièces (13A, ...) sont fabriquées à partir d'une matière de départ en forme de plaque selon le plan d'usinage (7) lisible par machine,
un dispositif de transport (9) au moyen de laquelle les pièces (13A, ...) sont transportées, en tant que produit à découper (11), pour trier les pièces (13A, ...), vers un poste de tri (21), dans lequel le produit à découper (11) est transporté, de manière à être disposé sous forme de plaques, par le dispositif de transport (9), et
une unité d'affichage comportant un processeur pour recevoir des données à sortir sur un moniteur (15A, 15B) de l'unité d'affichage, dans lequel
le moniteur (15A, 15B) est disposé de manière à être visible depuis le poste de tri (21) ou est conçu sous la forme de lunettes de réalité virtuelle ou sous la forme de système d'affichage tête haute,
le processeur est conçu pour recevoir des données d'image de pièce (8A) fournies par la commande de machine-outil (5) et, éventuellement, des données d'ordre (8B) pour les pièces (13A, ...), lesquelles sont transportées vers le poste de tri (21), et
le moniteur (15A, 15B) peut être commandé selon un procédé selon l'une quelconque des revendications 1 à 9 de telle sorte que les données d'image de pièce (10) et, éventuellement, les données d'ordre (8B) sont affichées sur le moniteur (15A, 15B) dans une séquence et, éventuellement, dans une disposition de telle sorte que la séquence et, éventuellement, la disposition des données d'image de pièce (10) et, éventuellement, les données d'ordre (8B) correspondent à la séquence et, éventuellement, à la disposition des pièces (13A, ...) transportées par le dispositif de transport (9) jusqu'au poste de tri (21).

11. Système de fabrication (1) selon la revendication 10, dans lequel le moniteur (15A) est disposé dans la zone du dispositif de transport (9), en particulier au-dessus d'une bande transporteuse (9A), et/ou dans la zone du poste de tri (21) ou
dans lequel le moniteur (15B) comprend au moins un petit écran en dessous d'un point de retournement d'une ligne de fabrication (9A) dans la zone du poste de tri (21).
